(19) Europäisches Patentamt / European Patent Office / Office européen des brevets

(11) **EP 3 821 792 B1**

(12) **EUROPEAN PATENT SPECIFICATION**

(45) Date of publication and mention
of the grant of the patent:
**04.03.2026 Bulletin 2026/10**

(21) Application number: **20207160.1**

(22) Date of filing: **12.11.2020**

(51) International Patent Classification (IPC):
*A61B 3/113* (2006.01)   *H04N 13/383* (2018.01)
*G02B 27/01* (2006.01)   *B60K 35/00* (2024.01)
*A61B 5/18* (2006.01)   *A61B 5/16* (2006.01)
*B60K 35/235* (2024.01)   *H04N 13/302* (2018.01)
*B60K 35/28* (2024.01)   *G02B 27/00* (2006.01)
*B60K 35/22* (2024.01)   *B60K 35/21* (2024.01)
*B60K 35/10* (2024.01)

(52) Cooperative Patent Classification (CPC):
**G02B 27/0101; B60K 35/10; B60K 35/211;
B60K 35/22; B60K 35/235; B60K 35/28;
H04N 13/302; H04N 13/383;** B60K 2360/149;
B60K 2360/1523; B60K 2360/177; B60K 2360/25;
G02B 27/0093; G02B 2027/0134; G02B 2027/0138;
(Cont.)

(54) **AN AUTOSTEREOSCOPIC DISPLAY SYSTEM AND METHOD OF PROJECTING A GAZE POSITION FOR THE SAME**

AUTOSTEREOSKOPISCHES ANZEIGESYSTEM UND VERFAHREN ZUM PROJIZIEREN EINER BLICKPOSITION DAFÜR

SYSTÈME D'AFFICHAGE AUTOSTÉRÉOSCOPIQUE ET SON PROCÉDÉ DE PROJECTION D'UNE POSITION DE REGARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2019 GB 201916544**

(43) Date of publication of application:
**19.05.2021 Bulletin 2021/20**

(73) Proprietor: **AUMOVIO Germany GmbH
60488 Frankfurt am Main (DE)**

(72) Inventors:
• **NGU, Sharon Kai Yun
339780 Singapore (SG)**
• **ANG, Kah Soon
339780 Singapore (SG)**
• **KABATEK, Ulrich
339780 Singapore (SG)**

(74) Representative: **Isarpatent
Patent- und Rechtsanwälte Partg mbB
Friedrichstraße 31
80801 München (DE)**

(56) References cited:
EP-A1- 3 144 718          WO-A1-2019/212633
US-A1- 2009 086 165       US-A1- 2017 054 970

• HANTAO ZHANG ET AL: "Overcoming latency with motion prediction in directional autostereoscopic displays", JOURNAL OF THE SOCIETY FOR INFORMATION DISPLAY - SID, 31 October 2019 (2019-10-31), US, XP055666308, ISSN: 1071-0922, DOI: 10.1002/jsid.848

(52) Cooperative Patent Classification (CPC): (Cont.)
G02B 2027/0187

**Description**

**TECHNICAL FIELD**

This disclosure relates to a display system, preferably an autostereoscopic display system. More preferably, the autostereoscopic display system as disclose herein is for a motor vehicle.

**BACKGROUND**

With the advancement of automotive technologies, there is an increasing need to provide information in relation to vehicle and traffic to drivers efficiently. One way to heighten comfort and enjoyment of users when utilising such vehicle applications is through human-machine interaction within motor vehicles, to allow driver to effectively interact with the vehicle without being distracted from the road.

A viable way of increasing human - machine interaction in vehicle applications is to provide augmented reality (AR) or virtual reality (VR) concepts into display systems within a motor vehicle, which allows viewing of information with three-dimensional (3D) effects. However, one of the challenges in 3D display systems is system latency, i.e. a delay or lag in the system from input to desired output, which may compromise enjoyment of user's experience or even safety of the driver.

Apart from improvement user interaction with machine, 3D displays in automotive helps to facilitate effective presentation of information to a driver, in particular when the automotive is in operation. This improves safety of driver viewing information. One type of 3D display is autostereoscopic displays, which enables a driver to view 3D images without the use of head mount device (HMD) such as 3D glasses (for example polarized glasses, LCD shutter glasses, etc.). An example of autostereoscopic 3D display includes multiple pixels configured to form an image on a display surface and a parallax barrier positioned adjacent to the display surface to separate the image into a left eye portion and a right eye portion. Under operating circumstances, the autostereoscopic 3D display is positioned substantially perpendicular to a line-of-sight of the viewer, for the viewer to see the image in 3D effect. A disadvantage of such set up is that the parallax barrier may not always be at an angle substantially perpendicular to the driver, due to a shift in driver's sitting position or viewing angle when driving. The display may not be oriented substantially perpendicular to the line of sight of the driver when viewed by the driver. Consequently, this adversely affects the 3D effect of the image that is being displayed to the viewer.

An example of such 3D displays is defined in WO 2014093100 A1 filed 12 April 2013, which discloses a vehicle display assembly including a 3D display and an actuator coupled to the 3D display. The actuator is configured to adjust an orientation of the 3D display relative to a vehicle occupant. The system includes a sensor assembly configured to monitor a position of a head of the vehicle occupant, and a controller communicatively coupled to the sensor assembly and to the actuator. The controller is configured to instruct the actuator to adjust the orientation of the 3D display based on head position of the vehicle occupant. A major disadvantage of the technique used in WO 2014093100 A1 is that the entire 3D display is to be actuated by motors. Using actuators limits the scope of angle of rotation. Therefore, the actuation of the 3D display may not always be in line of sight of user, defeating the purpose of a 3D display. In best case scenario, the vehicle occupant looking at overlapping two-dimensional images, which may be frustrating or in worst case scenario, detrimental to the safety of the driver.

In this regard, to achieve the objective of displaying images with 3D effects, prediction of eye position is crucial. A well-known eye-tracking technique for displaying 3D images is known in the application of head-mounted displays (HMD), which includes the use of optics commonly referred to as hot mirrors. Hot mirror technique permits a camera or other eye-tracking sensors to get an unobstructed view of the eye being tracked. Certain hot mirrors reflect infrared ("IR") radiation and are transparent to visible light. For purposes of HMD applications, hot mirror is tilted in front of the eye and allows an IR camera or other eye-tracking sensor to obtain a reflected image of the eye while the eye has a transparent view onto the display screen. One of the challenges of using the hot mirror technique for eye tracking activity is the requirement of high-resolution cameras to capture high frame rate. Additional pattern recognition devices are often necessary to support eye tracking function. Consequently, this is an expensive solution which does not provide cost efficiency for end-users. Although there are existing consumer-grade eye tracking devices known in the art which offer more economical solutions, consumer-grade eye tracking devices have substantial limitations in terms of performance. In addition, even though there are commercially inexpensive cameras in the market, such cameras attribute to other technical challenges for 3D images applications, since it is difficult to run such cameras at high frequency with sufficiently low latency. This may result in unwanted noise disturbance in system's signals. In other circumstances, the cameras are unable to support high sampling rate to characterise the actual movement of eye due to rapid movement of viewer, thus generate bad velocity and acceleration data causing error in predictions.

Another challenge in eye tracking function is saccadic motion, i.e. unnoticed and sometimes involuntary motion of a person's eyes as they move between planes of focus. Saccades can be voluntary or involuntary. When a person redirects his or her gaze to look at something, that is a voluntary saccade. A person's eye is constantly performing involuntary micro-saccades which are virtually imperceptible. Micro-saccades can help to refresh the image and edges a person is viewing on the person's retina. If an image does not move on the retina, the rods/cones on the person's retina may become desensitized to the image and the person effectively becomes blind to it.

To detect and measure micro-saccades in an eye-tracking system generally requires a minimum sampling rate of 240 Hz. It is also not generally possible to determine eye motion precisely unless measurements can be performed well enough to decide whether gaze change is a micro-saccade and the gaze is already reverting back onto the object of focus, or whether the eye movement is accelerating away with a voluntary saccade. To improve performance, more frequent and accurate data is required.

In this regard, one existing technique disclosed in WO 2018048626 A1 filed on 23 August 2017 defines an eye-tracking system and method for implementing sensor fusion techniques to predict eye-tracking activity for head-mounted displays using Kalman filtering techniques for prediction of eye movement. However, Kalman filtering techniques require calculations of various derivations, for example deriving coefficients for covariance matrices and filter gain for Kalman filtering. The calculation process is lengthy and cumbersome, which may slow the time cycle even if executed by a central processing unit.

Another technique as disclosed in EP 3144718 A1 discloses an autostereoscopic display for a vehicle that projects alternating left- and right-eye images through a parallax optical element (parallax barrier or lenticular) onto a curved wind shield, and teaches non-uniform array patterns (in the pixel array or barrier slits) that are shaped to conform to the wind shield curvature so as to reduce optical crosstalk. D1 also describes a detector that obtains eye positions and a controller that calculates an array pattern or otherwise adjusts the projection based on the detected eye positions before projecting the 3D image.

Yet another technique disclosed in US 2009086165 A1 discloses an eye gaze tracking system which includes steps of analysis of recorded gaze tracking data, to provide inaccessible feedback for web or interface design. US 2009086165 A1 discusses the use of time stamps in video data recorded by a camera, to estimate a saccade estimate value, to determine an eye gaze position. However, the use of time stamps in video data can only provide an estimated value, i.e. *a priori* eye gaze tracking system.

Another technique disclosed in HANTAO ZHANG ET AL: "Overcoming latency with motion prediction in directional autostereoscopic displays", JOURNAL OF THE SOCIETY FOR INFORMATION DISPLAY - SID, 31 October 2019 (2019-10-31), XP055666308, US ISSN: 1071-0922, DOI: 10.1002/jsid.848, discloses a method to address latency issues in directional autostereoscopic displays using motion prediction. The delays caused by camera buffering, computer processing, data transmission, and illumination refreshing lead to a degraded 3D viewing experience, particularly noticeable as flickering in directional backlight 3D displays. The paper quantitatively measures the exact latency in a typical display and proposes a motion prediction solution to enhance synchronization between the backlight illumination and the viewer's eye location. This approach reduces the lag, resulting in a flicker-free viewing experience for both stationary and moving viewers.

Taking into consideration of all of the above challenges, the existing techniques in the field of 3D display technologies do not perform eye movement prediction with sufficient accuracy, responsiveness or robustness to support prediction of eye position for motor vehicle applications. Even though techniques for eye tracking activities have been evolving, it appears that there is no practical solution focusing on high processing speed of 3D display technologies incorporating accuracy of eye position prediction. To achieve facilitating presentation of information for motor vehicle applications that requires high-speed and precision performance, which is crucial for safety of vehicle occupants' and other road users, the challenge of system latency in 3D displays needs to be resolved.

## SUMMARY

A purpose of this disclosure is to solve the problems that attribute to system latency in autostereoscopic display systems, in particular autostereoscopic display systems for use in a motor vehicle.

Another purpose of this disclosure is to solve the problem of adverse effect of viewing a 3D display due to misalignment of the display with gaze direction of a user.

Yet another purpose of this disclosure is to improve accuracy of eye gaze prediction function.

All of the above purposes facilitate the objective of achieving high-speed and precision of 3D information, necessary for vehicle applications.

The invention is defined by the appended claims. According to an aspect of this disclosure, an autostereoscopic display system as defined in appended claim Advantageously, the aforesaid system solves the problem of system latency, thereby achieving a high-speed autostereoscopic display system for motor vehicle.

In appended claim 1, the at least two frames of video data may be in sequence. Advantageously, increasing the frequency of extraction of the at least one coordinate improves the accuracy of calculation of the projected gaze position thereby achieving an autostereoscopic display system for motor vehicle with high precision performance.

The at least one category of time factor comprises an elapsed period and a latency compensation constant. Advantageously, by taking into consideration of time factor such as elapsed period and latency compensation constant solves the problem of saccade latency, thereby improving accuracy of eye gaze prediction function.

The elapsed period comprises a time difference between a pre-programmed duty cycle of the controller and an actual duty cycle in relation to the performance of the system. Advantageously, comparison of a time different between a pre-programmed duty cycle of the controller and an actual duty cycle of the system takes into consideration of real-time operation of the system, thereby achieving a high-speed autostereoscopic display system for motor vehicle. Advantageously, this feature solves the problem of system latency, thereby achieving a high-speed autostereoscopic display system for motor vehicle.

The latency compensation constant may comprise a time required to calculate and actuate the optical arrangement upon determination of the projected gaze position. Advantageously, this feature solves the problem of system latency, thereby achieving a high-speed autostereoscopic display system for motor vehicle.

The latency compensation constant may further comprise: a speed of actuating the optical arrangement, a speed of determining the projected gaze position, a speed of transmission of data signals within the display system or any combination thereof. Advantageously, this feature solves the problem of system latency, thereby achieving a high-speed autostereoscopic display system for motor vehicle.

The at least one coordinate may be a facial characteristic. Advantageously, by extracting at least one coordinate of a facial characteristics, the eye gaze prediction function is not restricted to eye movement. The facial characteristics may be an eye position, a position between a pair of eyes or a head position, thus allowing system flexibility and improves the accuracy of eye gaze prediction, thereby achieving a high precision autostereoscopic display system for motor vehicle.

According to a second aspect of this disclosure, a method as defined in appended claim 4.

Advantageously, the aforesaid method solves the problem of latency in autostereoscopic display system, thereby achieving a high-speed autostereoscopic display system for motor vehicle.

The method may further comprises receiving, by the controller, the two frames of video data in sequence. Advantageously, increasing the frequency of extraction of the at least one coordinate improves the accuracy of calculation of the projected gaze position thereby achieving an autostereoscopic display system for motor vehicle with high precision performance.

The method may further comprise processing, by the controller, the at least two frames of video data for extracting the at least one coordinate relative to a facial characteristic. Advantageously, by extracting at least one coordinate of a facial characteristics allows flexibility and improves the accuracy of eye gaze prediction.

According to a third aspect of this disclosure, a computer program for a controller as defined in appended claim 7.

Advantageously, the computer program of executes the function of calculating a projected eye gaze position and orientating an optical arrangement of a 3D display to achieve a high-speed and high precision autostereoscopic display system for motor vehicle.

According to a fourth aspect of this disclosure, a computer-readable storage medium as defined in appended claim 8.

Advantageously, the computer-readable storage medium stores instructions which upon execution, calculates a projected eye gaze position and orientate an optical arrangement of a 3D display to achieve a high-speed and high precision autostereoscopic display system for motor vehicle.

## BRIEF DESCRIPTION OF DRAWINGS

Other objects and aspects will become apparent from the following description of embodiments with reference to the accompany drawings in which:

Fig. 1 shows an autostereoscopic system in accordance to an exemplary embodiment.

Fig. 2a shows a flowchart for executing an autostereoscopic system in accordance to an exemplary embodiment.

Fig. 2b shows an algorithm of an eye tracking system of an autostereoscopic system in accordance to an exemplary embodiment.

Fig. 3 shows a time cycle of an autostereoscopic system in accordance to an exemplary embodiment.

Fig. 4 shows two video data frames with identified coordinates in accordance to an exemplary embodiment.

## DETAILED DESCRIPTION OF EMBODIMENTS

Hereinafter, an explanation of a system and method for improving system latency of an autostereoscopic display system of a motor vehicle will be discussed in detail.

For clarity, the term "velocity of a body movement" denotes a speed of movement of an upper body of a user, calculated based upon a difference between a first coordinate and a second coordinate, or a first pair of coordinates and a second pair of coordinates extracted from two different video data containing images of the user's upper body. The term "first" and "second" and the like may refer to various different elements of various embodiments of the present disclosure, but do not limit the elements. The expressions may be used to distinguish one element from another element, regardless of sequence of importance. For example, "a first coordinate" and a "second coordinate" may indicate different coordinates extracted from video data or images, regardless of order of importance. Similarly, "a first coordinate" may be referred to as "a second coordinate" and vice versa, without departing from scope of this disclosure.

The term "three-dimensional" or "3D" to an image that appears to have three dimensions, as compared to a two-dimensional perspective view of a 3D object. Such images may be known as stereoscopic images. As discussed herein, the present disclosure involves autostereoscopic displays that enables a vehicle occupant to view a 3D image on a display without the use of 3D glasses (e.g., polarized glasses, LCD shutter glasses, etc.).

The term "controller" denotes an electronic component responsible for computing functions of a display system. The computing functions may be executed by a microprocessor, a microcontroller, a state machine, and so forth. Under some circumstances, the "controller" may denote an application specific integrated circuit (ASIC), a programmable logic device (PLD), a field programmable gate array (FPGA), etc. The term "controller" may also denote a combination of processing devices, e.g., a combination of a digital signal processing (DSP) and a microprocessor, a plurality of microprocessors, one or more microprocessors in conjunction with a DSP core, or any other such configuration, for performing a series of processing steps.

The term "elapsed period" denotes time or duration which passes by between two operations, for example a delay in execution of a sequence of processing steps due to incompletion of a previous step, thereby affecting a duration or throughput of a system.

The term "duty cycle" denotes a cyclical operation of a system or other devices which operates intermittently rather than continuously.

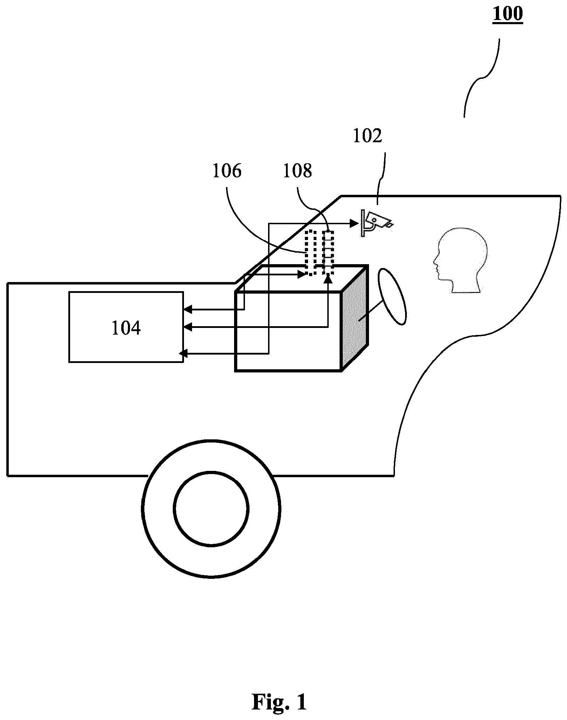

Turning now to the accompanying drawings, Fig. 1 shows an autostereoscopic display system 100 in accordance to an exemplary embodiment of this disclosure comprising of an eye tracking system 102, a controller 104 and a display screen 106 having an optical arrangement 108 displaced adjacently. The controller 104 may be a video display controller, which is also known as a display engine or display interface. The controller 104 is in electrical communication to both the eye tracking system 102 and the display screen 106, for transmitting and receiving electrical signals amongst the different electronic devices and/or sub-systems. This electrical communication may be vehicle network communication protocol, for example Local Interconnect Network (LIN), Controller Area Network (CAN) or FlexRay.

The display screen 106 has an optical arrangement 108 displaced adjacently. Combination of the display screen 106 and the optical arrangement 108 is configured to achieve the effects of three-dimensional images when viewed by a user, without the need of additional HMD such as a shutter glass. Ideally, the display screen 106 is a pixilated display screen. Examples of pixilated display screen includes liquid crystal displays (LCD), organic light emitting diode (OLED) displays, cathode ray tube (CRT) and Liquid crystal on silicon (LCos). To implement an autostereoscopic display, a pixilated display screen 106 is necessary for projecting or displaying images, and the optical arrangement 108 displaced adjacent to the display screen 106 is configured to separate the image displayed on the display screen 106 into a left-eye portion and a right-eye portion of the user, for visualization of 3D images. Such optical arrangement typically uses occlusion-based technologies (eg. parallax barrier, time-sequential aperture, moving slit, and cylindrical parallax barrier), refraction-based (eg. lenticular sheet, multiprojector, prism, and integral imaging), reflection-based, diffraction-based, illumination-based, and projection-based 3D display mechanisms. As a consequent of splitting the image into a left-eye portion and a right-eye portion, a left eye of the user views the left-eye portion of the image, and a right eye of the vehicle occupant views the right-eye portion of the image respectively. Since each eye is viewing a different image, the pixilated display screen appears to produce a 3D image. The aforesaid is known in the art, of which such information is intended to aid understanding of background art and does not form the inventive concept of this disclosure.

The eye tracking system 102 may be an imaging sensing system. Examples of imaging sensing system may be an in-vehicle driver's monitoring system or a cabin monitoring system for capturing video images of a vehicle occupant in the driver's seat and/or vehicle occupants in the passenger compartment of a motor vehicle. Video images captured by the eye tracking system 102 is transmitted from the eye tracking system 102 to the controller 104, which may further process the video images. In another exemplary embodiment, a camera or imaging device of eye tracking system 102 captures video images of the vehicle occupant and a control unit of eye tracking system 102 processes the video images before transmitting the video images to controller 104.

The controller 104 contains an executable computer program, which consist of instructions to cause the system to execute a series of functions or operations relative to the disclosure herein. The executable computer program may be retrievable from a computer-readable storage medium, for example a memory, such as random-access memory (RAM) which is integrated into the controller 104. The executable computer program enables the controller 104 to process data, calculate, automate reasoning and execute algorithmic functions, but are not limited thereto. The computer-readable storage medium is configured to store the computer program instructions and perform one or more operations which are further described in detail below.

In particular, the controller 104 is operable to execute calculation of a projected gaze position of the vehicle occupant based upon a velocity of body movement according to at least one coordinate 406, 408 extracted from two or more frames 402, 404 of video data transmitted from the eye tracking system 102 to the controller 104. The extraction of at least one coordinate 406, 408 from two or more frames of video data is part of an eye tracking or gaze prediction function that supports calculation of the projected gaze position. The extraction of the at least one coordinate 406, 408 from the two or more frames of video data and the calculation of the projected gaze position may be processed by the controller 104. More in particular, the controller 104 is operable to orientate the optical arrangement 108 relative to the calculated projected gaze position, based upon at least one category of time factor in relation to a performance of the autostereoscopic display system. By taking into account of at least one category of time factor that influences the performance of the autostereoscopic display system optimises the accuracy of positioning the optical arrangement 108 that is aligned with the projected gaze position of a user, thus achieving 3D effect when images displayed on the pixelated display screen 106 is being view by a vehicle occupant or driver. The processing steps involved for controller 104 to execute calculation of the projected gaze position and execute orientation of the optical arrangement 108 shall be discuss in more details below.

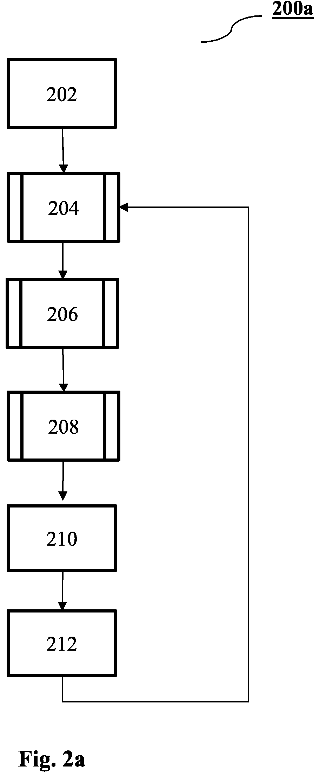

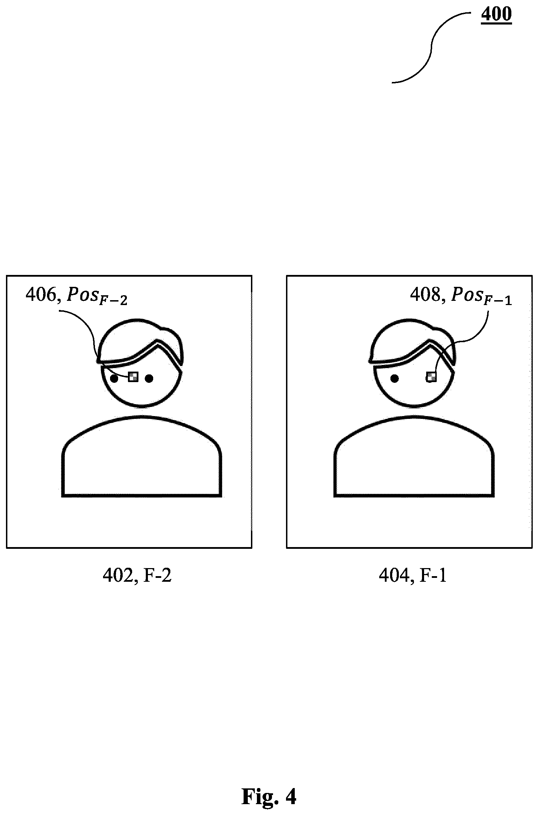

Referring to Fig. 2a which shows a flowchart 200a illustrating processing steps of an autostereoscopic display system in accordance to an exemplary embodiment of this disclosure. In step 202, the controller 104 of the autostereoscopic display system 100 receives at least two frames of video data 402, 404 captured. The at least two frames of video data may be acquired by the eye tracking system 102. As shown on Fig. 4, the at least two frames of video data 402, 404 comprises an upper body of the vehicle occupant. An eye movement prediction algorithm 200b of the controller 104 to extract at least one coordinate 406 from a first frame of video data 402, and at least one coordinate 408 from a second frame of video data 404 for prediction of eye movement activities in subsequent steps. In another exemplary embodiment, the extraction of coordinates 406, 408 is done by a controller of the eye tracking system 102.

In step 204, the controller 104 executes an extraction of at least one coordinate 406, 408 from each of the two or more frames of video data 402, 404 received by the controller 104. The at least one coordinate 406, 408 extracted from the two or more frames of video data being relative to a facial characteristic. Example of suitable coordinates includes a position of an eye, a position between a pair of eyes or a central position of a user's head. The controller 104 receives video data 404, 406 acquired by the one or more imaging devices of the eye tracking system 102. The video data 404, 406 may be transmitted to the controller 104 frame by frame, preferably in sequence of event. In an exemplary embodiment, the controller 104 processes two frames of video data 404, 406 received in sequence, to produce graphic images in vector format. Optionally, filtering methods may be applied to obtain a stable image output. In an alternative embodiment, the processing of graphic images into vector format may be executed by a controller (not shown) of the eye tracking system 102, at step 202 and the images are transmitted to the controller 104 frame by frame, at step 204. The extraction of at least one coordinate 406, 408 from two or more frames of video data 404, 406 at step 204 supports the function of prediction of eye gaze of the vehicle occupant, for calculation of the projected gaze position necessary for positioning the optical arrangement 108 in subsequent steps, and may be executed by controller 104.

In step 206, the controller 104 executes processing step for determination of a velocity of body movement of the driver, based upon the at least one coordinate 406, 408 extracted from the two or more frames of video data at previous step, step 204. According to an exemplary embodiment, the at least one coordinate extracted in step 206 corresponds to an eye position of the vehicle occupant. In this exemplary embodiment, the at least one coordinate 406, 408 is obtained by identifying 406 or $Pos_{F-2}$ and 408 or $Pos_{F-1}$ respectively from each of the two frames of video data 402 or F-2 and 404 or F-1, where at least one coordinate 406 or $Pos_{F-2}$ is extracted from an image captured earlier than $Pos_{F-1}$ chronologically.

Upon extracting the at least one coordinate 406, 408 from each of the two frames 402, 404 of video data from previous step 204, the controller 104 causes calculation of the velocity of body movement to be executed in step 206. The velocity of body movement may be determined by controller 104. This calculation is based upon a difference between a first coordinate extracted from the first frame of video data and a second coordinate extracted from the second frame of video data in pixel units, divided by period of one frame, where the period of one frame is an inverse of a framerate. The purpose of executing processing step 206 by the controller 104, is to obtain a speed of eye or upper body movement of the driver, for determining a projected gaze position such that the optical arrangement 108 may be adjusted relative to the projected gaze position of the driver, to achieve 3D effects when viewed by the vehicle occupant. For clarity, this calculation may be expressed using the following equation to represent a correlation between the velocity of body movement and the extraction of at least one coordinate 406, 408 from two frames 402, 404 of video data:

$$v = \frac{Pos_{F-2} - Pos_{F-1}}{1/frame\_rate}$$

By way of an example, if the eye position moved 50 pixels from left to right (as seen by video data or image processed), between $Pos_{F-2}$ and $Pos_{F-1}$ chronologically, the imaging device of the eye tracking system 102 is running at 60 frames per second (fps). This means that 1 frame period is 16.67 millisecond (ms) and the velocity of body movement is approximately 3 pixels/ms in the rightward direction. The calculated velocity of movement will contain both the magnitude and direction of movement. Likewise, if the vehicle occupant is looking in the leftward direction, the principle of the correlation between the velocity of body movement and the extraction of the at least one coordinate 406, 408 from two frames 402, 404 of video data shall apply.

In step 208, the controller 104 executes calculation of a projected gaze position of the vehicle occupant, based upon the velocity of body movement determined in previous step, step 206. This calculation is determined by multiplying the velocity of body movement with a time factor. The time factor includes an elapsed period, T, and/or a latency compensation constant, $T_{comp}$. For clarity, the calculation of the projected gaze position may be represented by:

$$Pos_F = v * (T + T_{comp})$$

The latency compensation constant, $T_{comp}$, is a time period or duration which represents the system latency related to actuation of the optical arrangement 108, i.e. change in position of the optical arrangement 108, after determination of the projected gaze position by the controller 104. Therefore the latency compensation constant $T_{comp}$ may be determined empirically, depending on a speed of orientating the optical arrangement 108, a speed of determining the projected gaze position, or a speed of transmission of data signals within the display system, which may contribute to the effect of latency compensation constant when in operation.

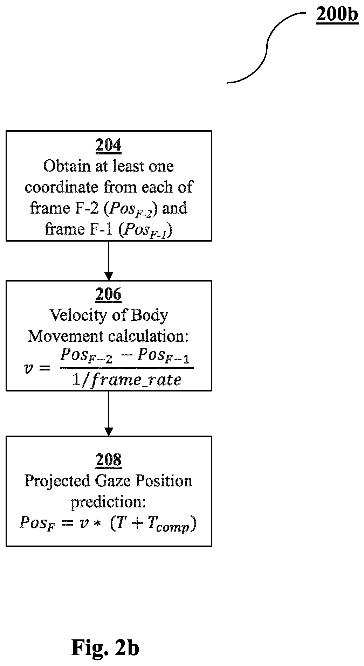

In step 210, determination of a position of the optical arrangement 108 is executed, where the position of the optical arrangement 108 is relative to the projected gaze position calculated in step 208. The determination of the position of the optical arrangement 108 may take into consideration a distance between driver and the optical arrangement 108. According to an exemplary embodiment, processing steps 204 to 208 may be an eye movement prediction algorithm 200b as shown in Fig. 2b, executed by controller 104 independently, although the controller 104 may not be limited thereto.

In the next step 212, the controller 104 executes an orientation of the optical arrangement 108 to a position relative to the projected gaze position calculated in step 210. The position of the optical arrangement 108 determined in step 210 is transmitted as a signal, by the controller 104, to execute an orientation of the optical arrangement 108. When executed, the actuation of the optical arrangement 108 is relative to the projected gaze position, i.e. when viewed by the vehicle occupant, the optical arrangement is substantially perpendicular to the projected gaze direction of the vehicle occupant.

Often times, automotive applications are complex and calls for an interface to connect the different systems together, such that transmission of signals amongst low-speed systems and faster systems within a vehicle network is able to inter-operate synchronously. A computer serial bus such as Inter-Integrated Circuit bus, also known as an I2C bus, also known may be used as such an interface for sending signals between different vehicular systems. However, I2C bus are manufactured according to manufacturer's specification with pre-programmed data transfer speed and duty cycle. It will be understood by a skilled addressee, data transfer speed and derivation of processing steps in each system and sub-systems within a vehicle network does not function at a constant speed in real-time operation.

In an exemplary embodiment, the I2C serial bus signal frequency, *f*, of controller 104 is 80Hz. Therefore, the I2C serial bus signal period is 12.5ms. It could be experimentally determined that a latency compensation constant, $T_{comp}$, of 20ms is required to fully compensate for the system latency. It was calculated in the previous step, step 206 that the eye position is predicted to have moved 97.5 pixels to the right relative to at least one coordinate 408, $Pos_{F-1}$. Since the pixel count is an integer value, it can be decided by the designer to round up or down to the nearest integer value.

In the event that the value of the extraction of at least one coordinate 406, 408 from the two or more video data frames 402, 404 transmitted from eye tracking system 102 to controller 104, i.e. step 204 is still not available at the next I2C serial bus signal cycle (i.e. elapsed time, T is now 25ms) then the prediction will output the current eye position as 135 pixels to the right of $Pos_{F-1}$. In another instance, the projected gaze prediction could have just completed one run-time cycle and passes the eye position just when the I2C signal begins a cycle, then elapsed time, $T$ = 0s and only latency compensation constant, $T_{comp}$.contribute to the calculation of projected gaze position. The eye movement prediction algorithm 200b will continue its run-time even if elapsed time, $T$ = 0s, in order to compensate the inherent latency of the system.

The extraction of the value of the at least one coordinate from the two or more video data, i.e. step 204 will output to step 208 for calculation of the projected gaze position, which is being relative to the orientation of a position of the optical arrangement 108. At step 212, the controller 104 executes an orientation of the optical arrangement 108 to a position relative to the projected gaze position calculated in step 210. In certain embodiments, an additional driver may be necessary for positioning or orientating the optical arrangement 108.

Once the above processing steps are completed, the system cycle will return to step 204.

A main advantage of this disclosure is the consideration of time factors to predict a gaze position of the driver, i.e. the projected gaze position, where the time factors have a direct influence on the performance of the autostereoscopic display system when in operation. This concept of measurement considers the time factors which contributes to the system's speed performance *"a posteriori"*, where the values are measured at output or calculated value derived at each processing step to address the problem of system latency. In contrast, most known methodology focuses on accuracy of determining an eye or a head position of a user to ensure that the autostereoscopic display system is displaying images that are substantially perpendicular to a user's line of sight, for example by applying Kalman filtering methods *"a priori"*, which estimates and predict events based on indirect measurements, which is unlike the present disclosure.

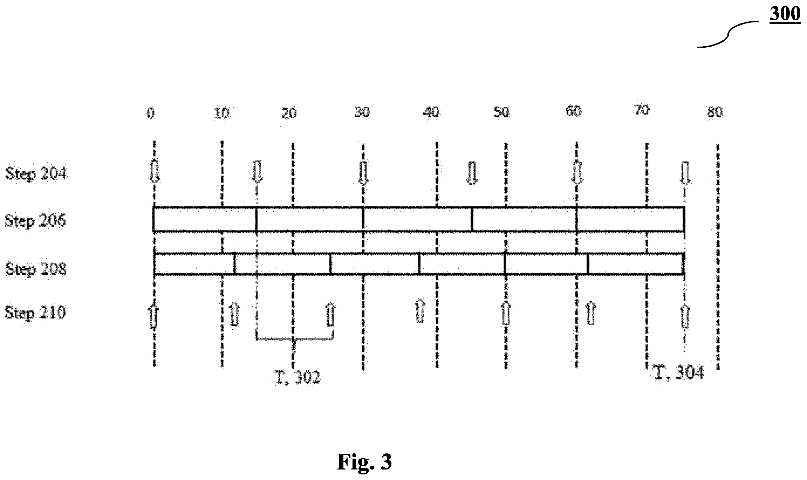

The following exemplary embodiments set forth below illustrate the duration taken to execute a series of processing steps has a direct effect on latency compensation constant, as shown in Fig. 3. The horizontal axis of Fig. 3 shows a value of time intervals from 0 seconds to 80 seconds at intervals of 10 seconds. Block 306 is a representation of a run-time cycle for executing step 206, while block 308 is a representation of a run-time cycle for executing step 208 as explained above.

In an exemplary embodiment, the I2C bus is ready to transmit a signal, for updating the optical arrangement, to execute an actuation of the optical arrangement based upon the calculated projected gaze position. However, the extraction of at least one coordinate 406, 408 from two frames 402, 404 of video data by the controller 104 (i.e. step 206) is incomplete. The elapsed period, T, 302, as shown in Fig. 3 which illustrates a time cycle of an autostereoscopic display system in accordance to an exemplary embodiment, is therefore taken as a time difference between the last available at least one coordinate 406, 408 extracted from video data frame 402, F-2 to the time when the optical arrangement 108 is ready for actuation to a position relative to the projected gaze position calculated by the controller 104. This correlation is a standard or pre-programmed duty cycle of a serial bus. Assuming, the I2C serial bus has a standard or pre-programmed duty cycle of 25ms, and the time cycle of the system for extracting the at least one coordinate 406, 408 from the two frames 402, 404 of video data is at 12.5ms, in this scenario, elapsed time, $T = 25ms - 12.5ms = 10ms.$

In another exemplary embodiment, the controller 104 has completely executed processing step 204, receiving two or more frames of video data containing coordinates corresponding to the user. The I2C serial bus is beginning it duty cycle and therefore, the time taken for both steps coincide and the elapsed period, T, 304 as shown on Fig. 3 is taken as $T = 0ms.$ Other factors which may contribute to latency compensation constant may also include a speed of transmission of data signals within the autostereoscopic display system. However, it shall be understood that the execution of the processing steps occurs even if elapsed period, T is at 0ms, in order to compensate the inherent latency of the autostereoscopic display system 100. For purposes of the above exemplary examples, the eye tracking system 102 run time is presumed to be at a constant value. It shall be understood by a person skilled in the art the eye tracking system runtime is not a constant value, i.e. the eye tracking system runtime varies between faster and/or slower runtime cycles.

## List of Reference Signs

100 - Autostereoscopic Display System
102 - Eye tracking system
104 - Controller
106 - Display screen
108 - Optical Arrangement
200 - Flowchart of processing steps
202 - Image Acquisition by eye tracking system
204 - Extraction of at least one coordinate
206 - Determination of a velocity of body movement
208- Calculation of Projected Gaze Position
210 - Determination of a position of the optical arrangement
212 - Execution of an orientation of the optical arrangement
300 - Bar Diagram of System Runtime Cycle
T, 302 - elapsed period between the last available at least one coordinate extracted to the time when the optical arrangement is ready for actuation
T, 304 - elapsed period between completion of step 204 compared against duty cycle of serial bus
306 - representation of a run-time cycle for executing step 206
308 - representation of a run-time cycle for executing step 208
400 - Exemplary embodiment of two video data frames
402, F-2 - A first frame of video data
404, F-1 - A second frame of video data
406, $Pos_{F-2}$ - at least one coordinate from first frame of video data
408, $Pos_{F-1}$ - at least one coordinate from second frame of video data

## Claims

1.  An autostereoscopic display system (100) for a motor vehicle comprising:

    a display screen (106) having an optical arrangement (108) displaced adjacent to the display screen (106), the optical arrangement (108) configured for visualisation of three-dimensional images;
    an eye tracking system (102) of the motor vehicle configured to monitor a gaze direction of a vehicle occupant;
    a controller (104) in electrical communication with the optical arrangement (108) and the eye tracking system (102), wherein the controller (104) is operable to execute:

calculation of a projected gaze position of the vehicle occupant in response to a velocity of body movement according to at least one coordinate (406, 408) extracted from at least two frames of video data transmitted from the eye tracking system (102) to the controller (104), and

orientation of the optical arrangement (108) relative to the calculated projected gaze position,

wherein the calculation of the projected gaze position further comprises:

calculate at least one category of time factor in relation to a performance of the autostereoscopic display system when in operation; and

multiply the velocity of the body movement extracted, with the at least one category of time factor calculated,

wherein the at least one category of time factor comprises an elapsed period (302, 304) and a latency compensation constant ($T_{COMP}$), wherein

the elapsed period (302, 304) comprises a time difference between a pre-programmed duty cycle of the controller and an actual duty cycle in relation to the performance of the system (100);

the latency compensation constant ($T_{COMP}$) comprise a time required to execute calculation of the projected gaze position and to execute orientation of the optical arrangement (108) upon calculation of the projected gaze position by the controller (104); and

the latency compensation constant ($T_{COMP}$) further comprises: a speed of actuating the display mechanism (108), a speed of determining the projected gaze position, a speed of transmission of data signals within the display system or any combination thereof.

2. The system (100) according to Claim 1, wherein the two frames (402, 404) of video data are in sequence.

3. The system (100) according to any one of the preceding claims, wherein the at least one coordinate (406, 408) is a facial characteristic.

4. A method (200) for improving system latency of an autostereoscopic display system (100) of a motor vehicle according any of the preceding claims, the method comprising:

Receiving (202), by the controller (104), at least two frames of video data of a vehicle occupant transmitted from an eye tracking system (102) of the motor vehicle;

Extracting (204), by the controller (104), at least one coordinate (406, 408) from the at least two frames (402, 404) of video data received;

calculating (208), by a controller (104), a projected gaze position of the vehicle occupant in response to a velocity of body movement according to at least one coordinate (406, 408) extracted from the at least two frames of video data received; and

executing (212), by the controller (104), orientation of an optical arrangement (108) of a display screen, the optical arrangement (108) for visualising three-dimensional images relative to the projected gaze position,

wherein the calculation of the projected gaze position further comprises:

calculating at least one category of time factor in relation to a performance of the autostereoscopic display system when in operation, and

multiplying the velocity of the movement extracted, with the at least one category of time factor calculated,

wherein the at least one category of time factor comprises an elapsed period (302, 304) and a latency compensation constant ($T_{COMP}$),

wherein

the elapsed period (302, 304) comprises a time difference between a pre-programmed duty cycle of the controller and an actual duty cycle in relation to the performance of the system (100);

the latency compensation constant ($T_{COMP}$) comprise a time required to execute calculation of the projected gaze position and to execute orientation of the optical arrangement (108) upon calculation of the projected gaze position by the controller (104); and

the latency compensation constant ($T_{COMP}$) further comprises: a speed of actuating the display mechanism (108), a speed of determining the projected gaze position, a speed of transmission of data signals within the display system or any combination thereof.

5. The method according to Claim 4, further comprising receiving, by the controller (104), the at least two frames (402, 404) of video data in sequence.

6. The method according to Claim 4-5, further comprising processing, by the controller (104), the at least two frames of video data for extracting the at least one coordinate (406, 408) relative to a facial characteristic.

7. A computer program of a processor comprising instructions to cause the system according to any one of Claims 1 to 3, to execute the operations of the method according to any one of Claims 4 to 6.

8. A computer-readable storage medium storing instructions to cause the system according to any one of Claims 1 to 3, to perform operations of the method according to any one of Claims 4 to 6.

**Patentansprüche**

1. Autostereoskopisches Anzeigesystem (100) für ein Kraftfahrzeug, umfassend:

   einen Anzeigebildschirm (106), der eine optische Anordnung (108) aufweist, die versetzt neben dem Anzeigebildschirm (106) angeordnet ist, wobei die optische Anordnung (108) dazu eingerichtet ist, dreidimensionale Bilder zu visualisieren;
   ein Augenverfolgungssystem (102) des Kraftfahrzeugs, das dazu eingerichtet ist, eine Blickrichtung eines Fahrzeuginsassen zu beobachten;
   eine Steuervorrichtung (104) in elektrischer Verbindung mit der optischen Anordnung (108) und dem Augenverfolgungssystem (102), wobei die Steuervorrichtung (104) Folgendes ausführen kann:

   Berechnen einer projizierten Blickposition des Fahrzeuginsassen in Reaktion auf eine Geschwindigkeit einer Körperbewegung gemäß mindestens einer Koordinate (406, 408), die aus mindestens zwei Frames von Videodaten extrahiert wird, die von dem Augenverfolgungssystem (102) an die Steuervorrichtung (104) gesendet werden, und
   Ausrichten der optischen Anordnung (108) relativ zu der berechneten projizierten Blickposition,

   wobei das Berechnen der projizierten Blickposition des Weiteren umfasst:

   Berechnen mindestens einer Zeitfaktorkategorie in Bezug auf eine Leistung des autostereoskopischen Anzeigesystems während des Betriebes; und

Multiplizieren der extrahierten Geschwindigkeit der Körperbewegung mit der mindestens einen berechneten Zeitfaktorkategorie,
wobei die mindestens eine Zeitfaktorkategorie eine verstrichene Zeitspanne (302, 304) und eine Latenzkompensationskonstante ($T_{COMP}$) umfasst,
wobei
die verstrichene Zeitspanne (302, 304) eine Zeitdifferenz zwischen einem vorprogrammierten Arbeitszyklus der Steuervorrichtung und einem tatsächlichen Arbeitszyklus in Bezug auf die Leistung des Systems (100) umfasst;
die Latenzkompensationskonstante ($T_{COMP}$) eine Zeit umfasst, die erforderlich ist, um das Berechnen der projizierten Blickposition auszuführen und das Ausrichten der optischen Anordnung (108) nach dem Berechnen der projizierten Blickposition durch die Steuervorrichtung (104) auszuführen;
und
die Latenzkompensationskonstante ($T_{COMP}$) des Weiteren umfasst: eine Geschwindigkeit des Betätigens des Anzeigemechanismus (108), eine Geschwindigkeit des Bestimmens der projizierten Blickposition, eine Geschwindigkeit des Sendens von Datensignalen innerhalb des Anzeigesystems, oder eine beliebige Kombination davon.

2. System (100) nach Anspruch 1, wobei die zwei Frames (402, 404) von Videodaten aufeinanderfolgen.

3. System (100) nach einem der vorangehenden Ansprüche, wobei die mindestens eine Koordinate (406, 408) ein Gesichtsmerkmal ist.

4. Verfahren (200) zum Verbessern der Systemlatenz eines autostereoskopischen Anzeigesystems (100) eines Kraftfahrzeugs nach einem der vorangehenden Ansprüche, wobei das Verfahren umfasst:

   Empfangen (202), durch die Steuervorrichtung (104), von mindestens zwei Frames von Videodaten eines Fahrzeuginsassen, die von einem Augenverfolgungssystem (102) des Kraftfahrzeugs gesendet werden;
   Extrahieren (204), durch die Steuervorrichtung (104), mindestens einer Koordinate (406, 408) aus den mindestens zwei empfangenen Frames (402, 404) von Videodaten;
   Berechnen (208), durch eine Steuervorrichtung (104), einer projizierten Blickposition des Fahrzeuginsassen in Reaktion auf eine Geschwindigkeit einer Körperbewegung gemäß mindestens einer Koordinate (406, 408), die aus den mindestens zwei empfangen Frames von Videodaten extrahiert wurde; und

Ausführen (212), durch die Steuervorrichtung (104), einer Ausrichtung einer optischen Anordnung (108) eines Anzeigebildschirms, wobei die optische Anordnung (108) dazu dient, dreidimensionale Bilder relativ zu der projizierten Blickposition zu visualisieren, wobei das Berechnen der projizierten Blickposition des Weiteren umfasst:

Berechnen mindestens einer Zeitfaktorkategorie in Bezug auf eine Leistung des autostereoskopischen Anzeigesystems während des Betriebes, und
Multiplizieren der extrahierten Geschwindigkeit der Bewegung mit der berechneten Zeitfaktorkategorie,
wobei die mindestens eine Zeitfaktorkategorie eine verstrichene Zeitspanne (302, 304) und eine Latenzkompensationskonstante ($T_{COMP}$) umfasst, wobei
die verstrichene Zeitspanne (302, 304) eine Zeitdifferenz zwischen einem vorprogrammierten Arbeitszyklus der Steuervorrichtung und einem tatsächlichen Arbeitszyklus in Bezug auf die Leistung des Systems (100) umfasst;
die Latenzkompensationskonstante ($T_{COMP}$) eine Zeit umfasst, die erforderlich ist, um das Berechnen der projizierten Blickposition auszuführen und das Ausrichten der optischen Anordnung (108) nach dem Berechnen der projizierten Blickposition durch die Steuervorrichtung (104) auszuführen; und
die Latenzkompensationskonstante ($T_{COMP}$) des Weiteren umfasst: eine Geschwindigkeit des Betätigens des Anzeigemechanismus (108), eine Geschwindigkeit des Bestimmens der projizierten Blickposition, eine Geschwindigkeit des Sendens von Datensignalen innerhalb des Anzeigesystems, oder eine beliebige Kombination davon.

5. Verfahren nach Anspruch 4, des Weiteren umfassend das Empfangen, durch die Steuervorrichtung (104), der mindestens zwei Frames (402, 404) von Videodaten nacheinander.

6. Verfahren nach Anspruch 4 und 5, des Weiteren umfassend das Verarbeiten, durch die Steuervorrichtung (104), der mindestens zwei Frames von Videodaten zum Extrahieren der mindestens einen Koordinate (406, 408) relativ zu einem Gesichtsmerkmal.

7. Computerprogramm eines Prozessors, umfassend Instruktionen, um das System nach einem der Ansprüche 1 bis 3 zu veranlassen, die Operationen des Verfahrens nach einem der Ansprüche 4 bis 6 auszuführen.

8. Computerlesbares Speichermedium, das Instruktionen speichert, um das System nach einem der Ansprüche 1 bis 3 zu veranlassen, Operationen des Verfahrens nach einem der Ansprüche 4 bis 6 durchzuführen.

**Revendications**

1. Système d'affichage autostéréoscopique (100) pour un véhicule à moteur, comprenant :

un écran d'affichage (106) comportant un agencement optique (108) déplacé de manière adjacente à l'écran d'affichage (106), l'agencement optique (108) étant configuré pour la visualisation d'images tridimensionnelles ;
un système de suivi oculaire (102) du véhicule à moteur, configuré pour surveiller une direction de regard d'un occupant du véhicule ;
un dispositif de commande (104) en communication électrique avec l'agencement optique (108) et le système de suivi oculaire (102), dans lequel le dispositif de commande (104) est capable d'exécuter :

le calcul d'une position de regard projetée de l'occupant du véhicule en réponse à une vitesse d'un mouvement du corps selon au moins une coordonnée (406, 408) extraite d'au moins deux trames de données vidéo transmises par le système de suivi oculaire (102) au dispositif de commande (104), et
l'orientation de l'agencement optique (108) par rapport à la position de regard projetée calculée,

dans lequel le calcul de la position de regard projetée consiste en outre à :

calculer au moins une catégorie de facteur temporel en relation avec la performance du système d'affichage autostéréoscopique lorsqu'il est en fonctionnement ; et
multiplier la vitesse du mouvement du corps extraite par ladite au moins une catégorie de facteur temporel calculée,
dans lequel ladite au moins une catégorie de facteur temporel comprend une période écoulée (302, 304) et une constante de compensation de latence ($T_{COMP}$),
dans lequel
la période écoulée (302, 304) comprend une différence de temps entre un rapport cyclique préprogrammé du dispositif de commande et un rapport cyclique réel en relation avec la performance du système (100) ;

la constante de compensation de latence ($T_{COMP}$) comprend un temps nécessaire pour exécuter le calcul de la position de regard projetée et pour exécuter l'orientation de l'agencement optique (108) lors du calcul de la position de regard projetée par le dispositif de commande (104) ; et

la constante de compensation de latence ($T_{COMP}$) comprend en outre : une vitesse d'actionnement du mécanisme d'affichage (108), une vitesse de détermination de la position de regard projetée, une vitesse de transmission des signaux de données au sein du système d'affichage ou toute combinaison de celles-ci.

2. Système (100) selon la revendication 1, dans lequel les deux trames (402, 404) de données vidéo sont en séquence.

3. Système (100) selon l'une quelconque des revendications précédentes, dans lequel ladite au moins une coordonnée (406, 408) est une caractéristique faciale.

4. Procédé (200) pour améliorer la latence de système d'un système d'affichage autostéréoscopique (100) d'un véhicule à moteur selon l'une quelconque des revendications précédentes, le procédé consistant à :

recevoir (202), par le dispositif de commande (104), au moins deux trames de données vidéo d'un occupant du véhicule transmises par un système de suivi oculaire (102) du véhicule à moteur ;

extraire (204), par le dispositif de commande (104), au moins une coordonnée (406, 408) à partir desdites au moins deux trames (402, 404) de données vidéo reçues ;

calculer (208), par un dispositif de commande (104), une position de regard projetée de l'occupant du véhicule en réponse à une vitesse d'un mouvement du corps selon au moins une coordonnée (406, 408) extraite desdites au moins deux trames de données vidéo reçues ; et

exécuter (212), par le dispositif de commande (104), l'orientation d'un agencement optique (108) d'un écran d'affichage, l'agencement optique (108) servant à visualiser des images tridimensionnelles par rapport à la position de regard projetée, dans lequel le calcul de la position de regard projetée consiste en outre à :

calculer au moins une catégorie de facteur temporel en relation avec une performance du système d'affichage autostéréoscopique lorsqu'il est en fonctionnement, et multiplier la vitesse du mouvement extraite par ladite au moins une catégorie de facteur temporel calculée,

dans lequel ladite au moins une catégorie de facteur temporel comprend une période écoulée (302, 304) et une constante de compensation de latence (TCOMP),
dans lequel

la période écoulée (302, 304) comprend une différence de temps entre un rapport cyclique préprogrammé du dispositif de commande et un rapport cyclique réel en relation avec la performance du système (100) ;

la constante de compensation de latence (TCOMP) comprend un temps nécessaire pour exécuter le calcul de la position de regard projetée et pour exécuter l'orientation de l'agencement optique (108) lors du calcul de la position de regard projetée par le dispositif de commande (104) ; et

la constante de compensation de latence (TCOMP) comprend en outre : une vitesse d'actionnement du mécanisme d'affichage (108), une vitesse de détermination de la position de regard projetée, une vitesse de transmission des signaux de données au sein du système d'affichage ou toute combinaison de celles-ci.

5. Procédé selon la revendication 4, consistant en outre à recevoir, par le dispositif de commande (104), lesdites au moins deux trames (402, 404) de données vidéo en séquence.

6. Procédé selon les revendications 4 à 5, consistant en outre à traiter, par le dispositif de commande (104), lesdites au moins deux trames de données vidéo pour extraire ladite au moins une coordonnée (406, 408) relative à une caractéristique faciale.

7. Programme informatique d'un processeur comprenant des instructions pour amener le système selon l'une quelconque des revendications 1 à 3 à exécuter les opérations du procédé selon l'une quelconque des revendications 4 à 6.

8. Support de stockage lisible par ordinateur stockant des instructions pour amener le système selon l'une quelconque des revendications 1 à 3 à exécuter les opérations du procédé selon l'une quelconque des revendications 4 à 6.

**Fig. 1**

200a

```
        ┌──────────────┐
        │     202      │
        └──────────────┘
                │
                ▼
     ┌┃┌──────────────┐┃┐
     │┃│     204      │┃│◀──────────┐
     └┃└──────────────┘┃┘           │
                │                    │
                ▼                    │
     ┌┃┌──────────────┐┃┐           │
     │┃│     206      │┃│           │
     └┃└──────────────┘┃┘           │
                │                    │
                ▼                    │
     ┌┃┌──────────────┐┃┐           │
     │┃│     208      │┃│           │
     └┃└──────────────┘┃┘           │
                │                    │
                ▼                    │
        ┌──────────────┐            │
        │     210      │            │
        └──────────────┘            │
                │                    │
                ▼                    │
        ┌──────────────┐            │
        │     212      │            │
        └──────────────┘            │
                │                    │
                └────────────────────┘
```

**Fig. 2a**

__200b__

**204**
Obtain at least one coordinate from each of frame F-2 ($Pos_{F-2}$) and frame F-1 ($Pos_{F-1}$)

**206**
Velocity of Body Movement calculation:

$$v = \frac{Pos_{F-2} - Pos_{F-1}}{1/frame\_rate}$$

**208**
Projected Gaze Position prediction:

$$Pos_F = v * (T + T_{comp})$$

**Fig. 2b**

**Fig. 3**

**400**

406, $Pos_{F-2}$

408, $Pos_{F-1}$

402, F-2

404, F-1

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014093100 A1
- WO 2018048626 A1
- EP 3144718 A1
- US 2009086165 A1

**Non-patent literature cited in the description**

- **HANTAO ZHANG et al.** Overcoming latency with motion prediction in directional autostereoscopic displays. *JOURNAL OF THE SOCIETY FOR INFORMATION DISPLAY - SID*, 31 October 2019, ISSN 1071-0922